(19) Europäisches Patentamt / European Patent Office / Office européen des brevets

(11) **EP 4 580 085 A1**

(12) **DEMANDE DE BREVET EUROPEEN**

(43) Date de publication:
**02.07.2025 Bulletin 2025/27**

(21) Numéro de dépôt: **24223262.7**

(22) Date de dépôt: **24.12.2024**

(51) Classification Internationale des Brevets (IPC):
***H04B 7/185*** (2006.01)

(52) Classification Coopérative des Brevets (CPC):
**H04B 7/18541; H04B 7/18513**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**GE KH MA MD TN**

(30) Priorité: **26.12.2023 FR 2315290**

(71) Demandeur: **THALES**
**92190 Meudon (FR)**

(72) Inventeurs:
• **SOULIE, Antoine**
**92622 GENNEVILLIERS CEDEX (FR)**
• **SCHOLLER, Franck**
**92622 GENNEVILLIERS CEDEX (FR)**
• **MATHIEU, Christophe**
**92622 GENNEVILLIERS CEDEX (FR)**

(74) Mandataire: **Lavoix**
**2, place d'Estienne d'Orves**
**75441 Paris Cedex 09 (FR)**

(54) **PROCÉDÉ DE TRANSFERT DE COMMUNICATIONS PAR SATELLITE**

(57) La présente invention concerne un procédé (30) de transfert de communications par satellite comprenant les étapes suivantes :
- par chaque terminal d'une pluralité (32), détermination (38) et transmission (40) d'une information de positionnement et mobilité à un satellite source défilant participant à une communication par satellite courante avec ledit terminal ;
- par chaque satellite source défilant (34), à partir de la ou desdites information(s) de positionnement et de mobilité reçues, détermination (42) et transmission (44) d'au moins un vecteur de transfert de communications par satellite, chaque vecteur de transfert étant transmis à un satellite cible défilant, et configuré pour l'informer de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

FIG.2

EP 4 580 085 A1

## Description

La présente invention concerne un procédé de transfert de communications par satellite mis en oeuvre au sein d'un système de communications par satellite, ledit système de communications par satellite comprenant au moins une pluralité de terminaux utilisateurs mobiles au sol et les ressources de communication satellite d'une constellation de satellites défilants selon un défilement prédéterminé avec une vitesse de déplacement constante.

La présente invention concerne également un programme d'ordinateur comportant des instructions logicielles qui, lorsqu'elles sont exécutées par un ordinateur, mettent en oeuvre un tel procédé de transfert de communications par satellite.

La présente invention concerne également un système de communication par satellite comprenant au moins une pluralité de terminaux utilisateurs mobiles au sol et les ressources de communication satellite d'une constellation de satellites défilants selon un défilement prédéterminé avec une vitesse de déplacement constante.

L'invention se rapporte au domaine des communications et plus particulièrement des télécommunications, en particulier des télécommunications par satellite (satcom) notamment en vue d'une application de la future norme (i.e. standard) pour les réseaux non terrestres 3GPP (de l'anglais *Third Génération Patnership Project for Non Terrestrial Network).*

Actuellement, pour les communications mobiles terrestres, le transfert de communication HO (de l'anglais *handover*) intercellulaire est notamment défini dans des normes (i.e. standard) 3GPP (de l'anglais *Third Generation Patnership Project*) notamment à partir du paragraphe 8.3.11 intitulé *« Information Transfert »* de la norme 3GPP TS 36.413, ou encore à partir du paragraphe 8.2 intitulé *« Basic mobility procedures »* de la norme 3GPP TS 36.423.

Il est à noter que, dans le contexte des communications mobiles terrestres, les stations de base (notamment eNB dans les normes précitées de l'anglais *evolved Node B* utilisée notamment pour les technologie LTE ou LTE Advanced) sont fixes et seul les terminaux (notamment UE de l'anglais *User Equipment*) ont la capacité de mobilité.

De plus, l'ensemble des stations de base radio déployées dans le contexte des communications mobiles terrestres sont hors contraintes, et peuvent si besoin avoir à disponibilité des ressources énergétiques importantes et ainsi pouvoir supporter plusieurs unités de communication déportées DU (de l'anglais *Deported Unit*) colocalisées et des émetteurs-récepteurs RRH puissants (de l'anglais *Remote Radio Head* correspondant à l'élément de puissance émetteur et récepteur également appelé tête radio) .

En outre, selon ces normes concernant les communications mobiles terrestres, la mobilité de chaque terminal est par ailleurs traitée unitairement du fait de l'incapacité à prédire leur déplacement et leur liberté de déplacement.

De ce fait, l'ensemble des mécanismes d'échanges de données décrits dans les normes précitées concernent les capacités de chaque terminal de mesurer un ensemble de paramètres et de les échanger, en fonction de son déplacement, avec sa station radio courante (qu'il va vraisemblablement quitter) et sa future station radio d'accueil (i.e. accueil après transfert de communication HO (i.e. handover)).

A partir de ces mécanismes, des droits d'accès et continuités de services sont vérifiés afin de permettre un transfert de communication (i.e. handover) du plan usager de la station radio courante que le terminal « quitte » vers la station radio d'accueil suivante qui va « l'accueillir ».

Autrement dit, ces mécanismes actuels relatifs aux communications mobiles terrestres concernent la capacité à effectuer et à mesurer les performances radio entre terminal et station de base radio afin d'optimiser le transfert de communication d'un terminal entre la station de base radio qu'il quitte et la station de base qui l'accueille.

Cet ensemble d'échanges décrits dans les normes précitées est effectué pour chaque terminal et nécessite un ensemble de mesures et de cycles de calcul important et donc énergivore.

Les nouvelles constellations de satellites ainsi que les satellites géostationnaires haut débit HTS (de l'anglais *High Throughput Satellite*) offrent une couverture globale ou multispots, chaque spot étant typiquement un cercle ou une ellipse de 100 à 500 km de diamètre, une couverture multispots couvrant un ou plusieurs continents, voire l'ensemble du globe.

Plus spécifiquement, un domaine de communications protégées utilise des satellites défilants en orbite non-géostationnaire, telle que l'orbite terrestre basse (LEO de l'anglais *low earth orbit*) ou l'orbite terrestre moyenne (MEO de l'anglais *medium earth orbit*).

Pour de telles communications sous une constellation défilante, la couverture n'est plus globale, mais régionale sous chacun des satellites qui ne sont plus « fixes » (i.e. géostationnaires) mais défilent dans l'espace.

De plus, pour de telles constellation de satellites en orbite de type LEO ou MEO, un terminal utilisateur (i.e. équipement) est généralement capable de déterminer de manière autonome son temps de transit. En effet, chaque satellite de ce type de constellation gère une multitude de spots. La taille du spot présente en général un diamètre inférieur à 100 km. Le terminal est en mesure de déterminer le spot dans lequel il se trouve, et donc sa localisation approximative, en écoutant le signal balise transmit par l'émetteur satellite (i.e. la partie de l'unité satellitaire de communication déportée DU (de l'anglais *Deported Unit*) embarquée dans le satellite) dans ce spot.

Les communications par satellites vont vraisemblablement adopter les normes 3GPP issues des communications mobiles terrestres, et notamment une norme adaptée spécifiquement pour le transfert de communication (i.e. handover).

Cependant, les ressources de communications satellite, en particulier d'une constellation de satellites défilants, présentent des capacités satellitaires contraintes. En effet, une unité satellitaire de communication déportée DU (de l'anglais *Deported Unit*) déployé est actuellement dans l'incapacité de traiter un nombre important de terminaux, par exemple supérieur à cent.

Autrement dit, les contraintes satellitaires en termes de taille, poids et puissance SWaP (de l'anglais Size, Weight and Power) d'une unité satellitaire de communication déportées DU, ayant notamment une capacité énergétique globale de 1500 à 1800 watts, nécessitent une optimisation globale des ressources de ladite unité satellitaire de communication déportées DU, et donc d'éviter l'ensemble de calculs complexes et de traitements, nécessitant une puissance énergétique importante, associé à l'ensemble d'échanges décrits dans les normes précitées relatives au transfert de communication pour les communications mobiles terrestres.

Le but de l'invention est alors de proposer un transfert de communication par satellite compatible avec les contraintes SWaP satellitaire tout en permettant, à un terminal de préparer, préalablement audit transfert, sa structure antennaire à pointer au mieux, et de manière synchronisée, le futur faisceau associé à l'unité satellitaire de communication déportées DU vers laquelle il est basculé lors du transfert de communication.

A cet effet, l'invention a pour objet un procédé de transfert de communications par satellite mis en oeuvre au sein d'un système de communications par satellite, ledit système de communications par satellite comprenant au moins une pluralité de terminaux utilisateurs mobiles au sol et les ressources de communication satellite d'une constellation de satellites défilants selon un défilement prédéterminé avec une vitesse de déplacement constante, ledit procédé comprenant au moins les étapes suivantes, mises en oeuvre cycliquement à chaque cycle d'échange entre un terminal utilisateur mobile et un satellite de ladite constellation de satellites défilants, ledit cycle prenant en compte ledit défilement prédéterminé :

- par chaque terminal utilisateur mobile de ladite pluralité, détermination d'une information de positionnement et de mobilité, et transmission de ladite information de positionnement et de mobilité à un satellite source défilant participant à une communication par satellite courante avec ledit terminal utilisateur mobile ;
- par chaque satellite source défilant, à partir de la ou desdites information(s) de positionnement et de mobilité reçues du ou desdits terminaux utilisateurs mobiles dont ledit satellite source à la gestion de communication par satellite courante, détermination et transmission d'au moins un vecteur de transfert de communications par satellite, chaque vecteur de transfert de communications par satellite étant transmis à un satellite cible défilant, et configuré pour l'informer de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

Ainsi, la présente invention propose de mettre en oeuvre, spécifiquement, un transfert de communication par satellite, distinct des mécanismes de transfert de communication précités associés aux communications mobiles terrestres, dans la mesure où au moins un vecteur de transfert de communications par satellite est utilisé.

Le vecteur de transfert de communications par satellite proposé spécifiquement selon la présente invention est transmis par un satellite source à un satellite cible défilant, et configuré pour informer la satellite cible de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

Comparé aux mécanismes de transfert de communication précités associés aux communications mobiles terrestres, le procédé de transfert de communication par satellite selon la présente invention permet d'éviter d'effectuer des mesures radio et les calculs associés pour valider ou non un transfert de communication HO (i.e. handover)).

En effet, le procédé proposé tire profit du fait que le transfert de communication par satellite est prévisible et par nature « inévitable », du fait du défilement automatique des satellites de la constellation de satellites défilants, un satellite se déplaçant par exemple sur l'orbite terrestre basse (LEO de l'anglais *low earth orbit*) a une vitesse d'environ 7,8 Km/s soit 28 000 Km/h, et ainsi beaucoup plus rapidement que ne peut se déplacer un terminal utilisateur actuellement impropre à se déplacer sur terre à une telle vitesse.

L'approche vectorielle proposée permet ainsi une optimisation des ressources radio embarquées staellitaires et d'autres avantages décrits par la suite.

Suivant d'autres aspects avantageux de l'invention, le procédé comprend une ou plusieurs des caractéristiques suivantes, prises isolément ou suivant toutes les combinaisons techniquement possibles :

- ladite étape de détermination d'une information de positionnement et de mobilité comprend la détermination d'au moins trois éléments formant ladite information de positionnement et de mobilité correspondant à :

- la vitesse de déplacement dudit terminal utilisateur mobile ;
- la direction de déplacement dudit terminal utilisateur mobile ;
- la position courante dudit terminal utilisateur mobile ;

- le procédé comprend en outre ensuite une étape, mise en oeuvre par chaque satellite cible défilant, de réception dudit vecteur de transfert de communications par satellite et de génération et transmission d'un message d'accusé réception dudit vecteur de transfert de communications par satellite audit satellite source ayant émis ledit vecteur de transfert de communications par satellite ;
- le procédé comprend en outre ensuite, les étapes suivantes, mises en oeuvre par chaque satellite source défilant :

  - réception de chaque message d'accusé réception de vecteur de transfert émis par chaque satellite cible ;
  - génération d'un message de contrôle de ressources de communication satellite configuré pour informer chaque terminal utilisateur mobile, dont ledit satellite source a la gestion de communication par satellite courante, du satellite cible chargé de prendre en charge la communication par satellite courante au prochain changement de secteur de couverture satellite, selon ledit défilement, et transmission dudit message à chaque terminal utilisateur mobile, dont ledit satellite source à la gestion de communication par satellite courante ;

- le procédé comprend en outre ensuite les étapes suivantes, mises en oeuvre par chaque terminal utilisateur mobile de ladite pluralité :

  - réception dudit message de contrôle de ressources de communication satellite ;
  - estimation du temps restant jusqu'audit transfert de prise en charge de la communication par satellite courante par ledit satellite cible indiqué au sein dudit message de contrôle de ressources de communication satellite ;
  - génération, et transmission audit satellite source ayant en charge la communication par satellite courante, d'un message d'accusé réception dudit message de contrôle de ressources de communication satellite comprenant ledit temps restant avant transfert estimé lors de ladite estimation ;
  - préparation de la position de son système antennaire pour pointer ledit satellite cible au bout dudit temps restant estimé ;

- ladite estimation utilise le référentiel de l'éphéméride du défilement dudit satellite cible.
- le procédé comprend en outre ensuite les étapes suivantes, mises en oeuvre par chaque satellite source défilant :

  - réception de chaque message d'accusé réception comprenant ledit temps restant avant transfert estimé émis par chaque terminal utilisateur mobile, dont ledit satellite source à la gestion de communication par satellite courante,
  - mise à jour de chaque vecteur de transfert de communications par satellite avec une indication d'instants de transfert obtenue à partir d'un temps de transmission de message et desdits temps restants avant transfert estimés et associés à chaque terminal utilisateur mobile dudit ensemble de terminaux utilisateurs mobile indiqué au sein de chaque vecteur de transfert, et transmission de chaque vecteur de transfert de communications par satellite mis à jour au satellite cible défilant correspondant ;

- le procédé comprend en outre ensuite une étape, mise en oeuvre par chaque terminal utilisateur mobile, après expiration dudit temps restant avant transfert, de génération et de transmission, audit satellite cible, d'un message de confirmation dudit transfert de communications par satellite.

L'invention concerne également un programme d'ordinateur comportant des instructions logicielles qui, lorsqu'elles sont exécutées par un ordinateur, mettent en oeuvre un procédé de transfert de communication par satellite tel que défini ci-dessus.

L'invention concerne également un système de communication par satellite comprenant au moins une pluralité de terminaux utilisateurs mobiles au sol et les ressources de communication satellite d'une constellation de satellites défilants selon un défilement prédéterminé avec une vitesse de déplacement constante, ledit système de communication par satellite étant configuré pour mettre en oeuvre le procédé de transfert de communication par satellite tel que décrit précédemment.

L'invention apparaîtra plus clairement à la lecture de la description qui va suivre, donnée uniquement à titre d'exemple non limitatif, et faite en référence aux dessins dans lesquels :

[Fig. 1] la figure 1 illustre un système de communication selon la présente invention ;
[Fig. 2] la figure 2 est un organigramme d'un procédé de transfert de communication par satellite selon l'invention.

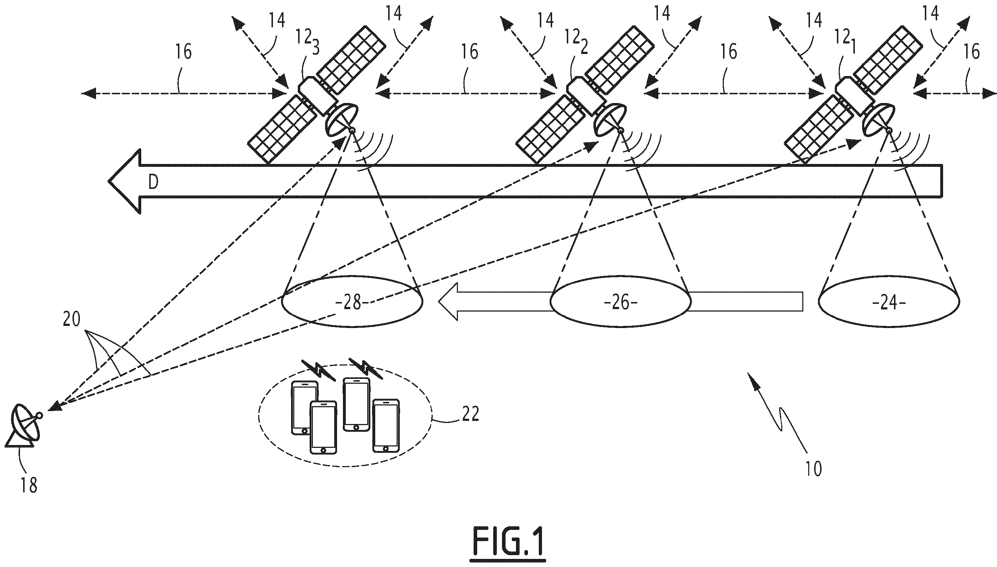

La figure 1 illustre un système de communication selon la présente invention.

Selon l'exemple de la figure 1, plusieurs satel-

lites $12_1$, $12_2$, $12_3$ d'une constellation de satellites défilants sont représentés à un instant t.

A noter que par souci de simplicité sur la figure 1 les satellites $12_1$, $12_2$, $12_3$ sont représentés « comme » seulement alignés selon une même orbite alors qu'en réalité chacun des satellites de ladite constellation suit, une orbite ou loxodromie prédéterminée qui lui est propre, telle qu'une orbite terrestre basse (LEO de l'anglais *low earth orbit*) ou une orbite terrestre moyenne (MEO de l'anglais *medium earth orbit*) selon la constellation considérée, et ce selon un sens de déplacement D, avec des liaisons inter-satellitaires 14 (ici illustré en diagonale) et 16 (ici illustré en latéral) vers les satellites défilants voisins de ladite constellation. Via ces liaisons inter-satellitaires 14 (ici illustré en diagonale) et 16 (ici illustré en latéral) chaque satellite est propre à informer selon la présente ses satellites voisins (en diagonal et en latéral).

Au sol une station d'ancrage 18 est représentée sur la figure 1, ladite station d'ancrage 18 étant propre à communiquer selon les liaisons de communication 20 respectivement avec chaque satellite défilant 12 (i.e. $12_1$ ou $12_2$ ou $12_3$) représenté.

Comme illustré sur la figure 1, l'ensemble d'éléments satellitaire $12_1$, $12_2$, $12_3$ portant chacun une unité de communication déportée DU (de l'anglais *Deported Unit*) est propre, selon la présente invention, à être un satellite source ou un satellite cible utilisé pour le transfert des communications par satellite d'une pluralité 22 de terminaux utilisateurs.

Les zones de couvertures 24, 26 et 28, respectivement associées aux satellites $12_1$, $12_2$, $12_3$ sont également représentées sur la figure 1.

Il est à noter qu'au fur et à mesure du défilement selon le sens de déplacement D, le satellite $12_1$ avec sa zone de couverture 24 va inévitablement défiler autour de la Terre selon orbite ou loxodromie prédéterminée qui lui est propre, jusqu'à prendre la position du satellite $12_2$ de couverture 26 à un instant t + T, T étant la durée nécessaire au satellite 12, pour arriver à la position du satellite $12_2$ le précédant selon le sens de défilement D sur l'orbite ou loxodromie prédéterminée, puis la position du satellite $12_3$ de couverture 28 à un instant t + 2T.

A chaque cycle d'échange entre un terminal utilisateur mobile de la pluralité 22 et un satellite, par exemple $12_1$, $12_2$, $12_3$, de ladite constellation de satellites défilants, ledit cycle prenant en compte ledit défilement prédéterminé, chaque terminal utilisateur mobile de ladite pluralité 22, est configuré pour déterminer une information de positionnement et de mobilité, et pour transmettre ladite information de positionnement et de mobilité à un satellite source défilant participant à une communication par satellite courante avec ledit terminal utilisateur mobile.

Il est à noter que le cycle est propre à prendre en compte le défilement prédéterminé du fait de la géolocalisation prédictionnelle des satellites dans l'espace et des terminaux sur terre, les positions (Xi, Yi, Zi) de chaque terminal de l'ensemble des terminaux étant connues dans le temps, de même que la position des satellites dans l'espace. Chaque cycle étant ainsi prédictif, il est possible de quantifier/définir l'ensemble de terminaux (en le définissant notamment à l'aide d'un barycentre ou d'un centre de gravité géographique) qui seront transférés vers le prochain satellite.

Par exemple, le satellite source est le satellite $12_2$ de la figure 1, et le terminal considéré est dans la zone de couverture 26 de ce satellite source $12_2$.

Chaque satellite source défilant, notamment ici le satellite source $12_2$, à partir de la ou desdites information(s) de positionnement et de mobilité reçues du ou desdits terminaux utilisateurs mobiles dont ledit satellite source à la gestion de communication par satellite courante, est configuré pour déterminer et transmettre au moins un vecteur de transfert de communications par satellite, chaque vecteur de transfert de communications par satellite étant transmis à un satellite cible défilant, par exemple le satellite $12_1$, et configuré pour l'informer de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

Autrement dit, ici on entend par « vecteur » l'unique information « vectorielle » qui regroupe en son sein tous les terminaux utilisateurs (i.e. l'ensemble des terminaux) que le satellite cible destinataire de cette information va prendre en charge lors du basculement résultant du transfert de communication.

Par exemple, si le terminal considéré est dans la zone de couverture 26 du satellite source $12_2$ et qu'il ne bouge pas ou très lentement par rapport à la vitesse de défilement des satellites de la constellation de satellites défilants, alors le satellite $12_1$ est potentiellement le satellite cible pour assurer la continuité de service de la communication en cours avec le satellite $12_1$.

Autrement dit, les terminaux utilisateurs terrestres considérés d'une zone de couverture (piétons ou à bord d'un véhicule) ne se déplacent pas assez vite par rapport aux satellites défilants dont la vitesse est bien largement supérieure (un satellite se déplaçant par exemple sur l'orbite terrestre basse ayant une vitesse d'environ 7,8 Km/s soit 28 000 Km/h).

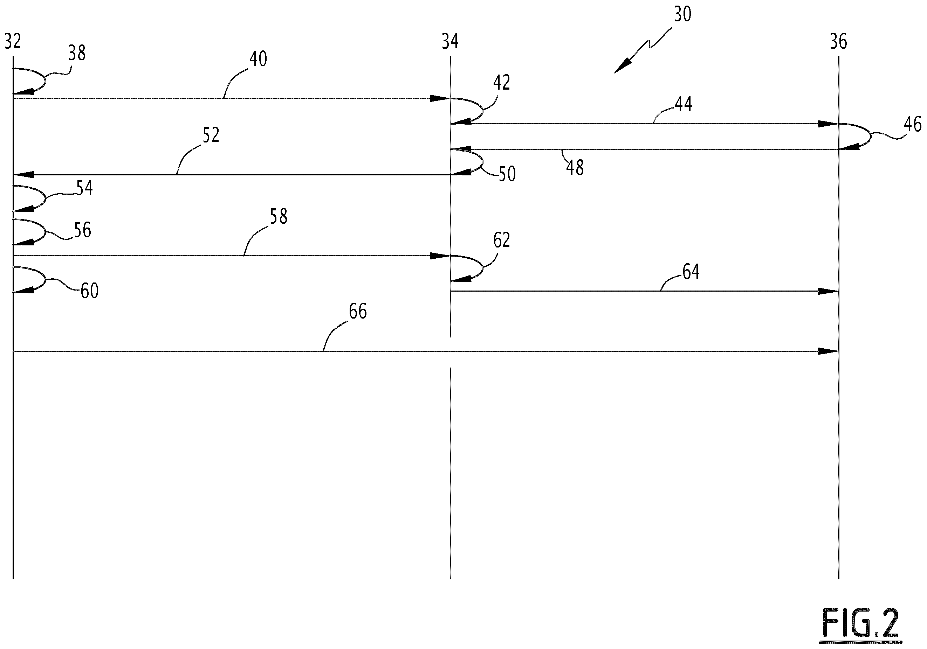

On décrit ci-après plus en détail en relation avec la figure 2 la mise en oeuvre d'un transfert de communication par satellite au sein dudit système de communication illustré par la figure 1 décrite précédemment.

Plus précisément, la figure 2 est un organigramme d'un procédé 30 de transfert de communication par satellite selon l'invention. Pour des raisons de simplicité de représentation sont représentés d'une part une pluralité 32 de terminaux, un satellite source 34 qui prend en charge la communication courante et un satellite cible 36 propre à assurer la continuité de cette communication courante après transfert de communication mis en oeuvre nécessairement du fait du défilement prédéterminé et à vitesse de déplacement constante des satellites de la constellation de satellites défilants considérée.

Tout d'abord, selon une étape 38 chaque terminal utilisateur mobile de ladite pluralité 32, met en oeuvre la détermination d'une information de positionnement et de mobilité.

En complément facultatif, ladite étape de détermination d'une information de positionnement et de mobilité comprend la détermination d'au moins trois éléments formant ladite information de positionnement et de mobilité correspondant à :

- la vitesse de déplacement dudit terminal utilisateur mobile considéré;
- la direction de déplacement dudit terminal utilisateur mobile considéré;
- la position courante dudit terminal utilisateur mobile considéré.

Ces trois éléments sont notamment déterminés dans un référentiel spatial selon la latitude, la longitude et la hauteur, par exemple sous un référencement géospatial de type projection de Mercator.

En effet, comme indiqué précédemment, pour de telles constellation de satellites défilants, notamment défilants en orbite de type LEO ou MEO, un terminal utilisateur (i.e. équipement) est généralement capable de déterminer de manière autonome son temps de transit. En effet, chaque satellite de ce type de constellation gère une multitude de spots. La taille du spot est en général inférieure à 100 km. Le terminal est en mesure de déterminer le spot dans lequel il se trouve, et donc sa localisation approximative, en écoutant le signal balise transmit par l'émetteur satellite dans ce spot.

Puis, selon l'étape 40, chaque terminal utilisateur mobile de ladite pluralité 32 met en oeuvre la transmission de ladite information de positionnement et de mobilité à un satellite source 34 défilant participant à une communication par satellite courante avec ledit terminal utilisateur mobile.

Lors de l'étape 42, chaque satellite source 34 défilant, à partir de la ou desdites information(s) de positionnement et de mobilité reçues du ou desdits terminaux utilisateurs mobiles dont ledit satellite source à la gestion de communication par satellite courante, met en oeuvre la détermination 42 d'au moins un vecteur de transfert de communications par satellite, chaque vecteur de transfert de communications par satellite étant transmis à un satellite cible défilant, et configuré pour l'informer de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

Lors de l'étape 44, chaque vecteur de transfert de communications par satellite est transmis au satellite cible 36 dudit transfert de communication à mettre en oeuvre (un tel vecteur est un vecteur de données en masse (ou vecteur de donnée de masse) par exemple appelé en anglais « *BULK vector information* » pour désigner le transfert de communication en bloc d'un ensemble de terminaux utilisateurs à la fois).

En complément facultatif, le procédé 30 selon la présente invention comprend en outre une étape, correspondant à l'extrémité de la flèche associée à l'étape 44, mise en oeuvre par chaque satellite cible 36 défilant, de réception dudit vecteur de transfert de communications par satellite.

Ensuite, selon ce complément, chaque satellite cible 36 défilant met en oeuvre une étape 46 de génération d'un message d'accusé réception dudit vecteur de transfert de communications par satellite.

Puis, selon ce complément, chaque satellite cible 36 défilant met en oeuvre une étape 48 de transmission dudit message d'accusé réception audit satellite source 34 ayant émis ledit vecteur de transfert de communications par satellite

Ensuite, en complément facultatif, chaque satellite source défilant 34 met en oeuvre une étape 50 de génération d'un message de contrôle de ressources de communication satellite RRC (de l'anglais *Radio Resource Control*) configuré pour informer chaque terminal utilisateur mobile de la pluralité 32, dont ledit satellite source 34 a la gestion de communication par satellite courante, du satellite cible 36 chargé de prendre en charge la communication par satellite courante au prochain changement de secteur de couverture satellite, selon ledit défilement.

Puis, selon l'étape 52 chaque satellite source défilant 34 transmet ledit message de contrôle de ressources de communication satellite RRC à chaque terminal utilisateur mobile de la pluralité 32, dont ledit satellite source 34 à la gestion de communication par satellite courante.

En complément facultatif, le procédé 30 comprend également les étapes suivantes 54, 56, 58 et 60 mises en oeuvre par chaque terminal utilisateur mobile de ladite pluralité 32 après réception (correspondant à l'extrémité de la flèche représentant l'étape précédente 52 de transmission par chaque satellite source 34).

L'étape 54 est une étape d'estimation du temps restant jusqu'audit transfert de prise en charge de la communication par satellite courante par ledit satellite cible indiqué au sein dudit message de contrôle de ressources de communication satellite, le défilement, l'agencement des satellites au sein de la constellation étant connus de même que leur vitesse de déplacement constante.

Selon un aspect optionnel, ladite estimation 54 utilise le référentiel de l'éphéméride du défilement dudit satellite cible 36. Plus précisément, chaque terminal utilisateur mobile de ladite pluralité 32 est capable de calculer ce temps $t_1$ restant au vu du déplacement connu des satellites défilants et de son propre vecteur de déplacement qu'il a déterminé auparavant en vitesse et en direction lors de l'étape 38 tel que $t_1 = \frac{v_x}{d_x}$ , avec $v_x$ la vitesse et $d_x$ la distance parcourue par ledit satellite cible 36. En effet, chaque satellite de la constellation, y compris le satellite cible, se déplace toujours à la même vitesse ce qui rend possible d'estimer (sensiblement à 99,9%) la probabilité de devoir poursuivre les communications courantes associées au satellite source avec ledit satellite cible.

Ensuite, chaque terminal utilisateur mobile de la pluralité 32 met en oeuvre la génération 56, audit satellite source 34 ayant en charge la communication par satellite courante, d'un message d'accusé réception dudit message de contrôle de ressources de communication satellite RRC, ledit message d'accusé réception comprenant ledit temps restant avant transfert estimé lors de ladite estimation 54.

Puis, selon l'étape 58, chaque terminal utilisateur mobile de la pluralité 32 met en oeuvre la transmission 58 en tant que telle audit satellite source 34 dudit message d'accusé réception comprenant ledit temps restant avant transfert estimé.

En outre, suite à cette transmission 58, ou en parallèle, chaque terminal utilisateur mobile de la pluralité 32 met en oeuvre une étape 60 de préparation de la position de son système antennaire pour pointer ledit satellite cible au bout dudit temps restant estimé.

En effet, chaque message de contrôle de ressources de communication satellite RRC (de l'anglais *Radio Resource Control*) permet à chaque terminal utilisateur mobile de la pluralité 32 de préparer son mécanisme antennaire pour pointer le faisceau (de l'anglais *beam*) du satellite cible configuré pour prendre en charge sa communication courante une fois le transfert de communication effectué. Autrement dit, grâce à la présente invention, chaque terminal utilisateur mobile de la pluralité 32 évite de faire l'ensemble de mesures et de cycles de calcul important et donc énergivore tel qu'associé mécanismes actuels relatifs aux communications mobiles terrestres. Ainsi, l'orientation antennaire de terminal utilisateur mobile est préparée pour être asservie au prochain satellite cible adapté à prendre en charge la continuité de service après transfert de communication en tenant compte du positionnement et de la mobilité des terminaux.

Suite à la transmission 58, par chaque terminal utilisateur mobile de la pluralité 32 dudit message d'accusé réception comprenant ledit temps restant avant transfert estimé, chaque satellite source 34 met en oeuvre la réception de ce message d'accusé réception comprenant ledit temps restant avant transfert estimé (ladite réception correspondant à l'extrémité de la flèche de l'étape de transmission 58).

Suite à cette réception, selon l'étape 62, chaque satellite source 34 met en oeuvre une mise à jour de chaque vecteur de transfert de communications par satellite avec une indication d'instants de transfert (i.e. estimatifs du temps restant avant basculement de la communication vers le satellite cible) obtenue à partir d'un temps de transmission de message et desdits temps restants avant transfert estimés et associés à chaque terminal utilisateur mobile dudit ensemble de terminaux utilisateurs mobile indiqué au sein de chaque vecteur de transfert.

L'étape 64 correspond à la transmission, au satellite cible 36 défilant correspondant, mise en oeuvre par chaque satellite source 34, de chaque vecteur de transfert de communications par satellite mis à jour.

Enfin, optionnellement, le procédé 30 comprend en outre, l'étape 66 selon laquelle chaque terminal utilisateur mobile, après expiration dudit temps restant avant transfert, de génère et de transmet, audit satellite cible 36, un message de confirmation dudit transfert de communications par satellite.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi d'optimiser la gestion des ressources radios embarqués satellitaires, de garantir le transfert de communication simultané en bloc (i.e. de l'anglais *bulk*) d'un nombre plus grand de terminaux nécessitant des mécanismes de mobilités, et le cas échéant d'optimiser le temps de bascule d'un terminal vers son satellite cible du fait qu'il a auparavant préparé son système antennaire à pointer sur ce satellite cible, et propose pour se faire d'adapter/remplacer, comme indiqué précédemment, l'ensemble des mécanismes d'échanges de données décrits dans les normes précitées relatifs aux communications mobiles terrestres, avec des échanges, tels que décrits précédemment en relation avec la description de la présente invention, basés sur l'utilisation d'un vecteur de transfert de communications par satellite permettant un transfert de communications en masse (i.e. « bulk ») d'une pluralité de terminaux à la fois.

En outre, il est à noter que cette solution est avantageusement compatible des formes d'ondes des radios cellulaires appliquées aux équipements SATCOM®, réseau non terrestre de cinquième génération, 5G NTN (de l'anglais *Non-Terrestrial Network*), et utilement propre à se décliner dans le cadre du standard 3GPP, en particulier en apportant une réponse au transfert de communication (i.e. *handover)* sous constellation défilante.

**Revendications**

1. Procédé (30) de transfert de communications par satellite mis en oeuvre au sein d'un système de communications par satellite, ledit système de communications par satellite comprenant au moins une pluralité (32) de terminaux utilisateurs mobiles au sol et les ressources de communication satellite d'une constellation de satellites défilants selon un défilement prédéterminé avec une vitesse de déplacement constante, ledit procédé comprenant au moins les étapes suivantes, mises en oeuvre cycliquement à chaque cycle d'échange entre un terminal utilisateur mobile et un satellite de ladite constellation de satellites défilants, ledit cycle prenant en compte ledit défilement prédéterminé :

- par chaque terminal utilisateur mobile de ladite pluralité, détermination (38) d'une information de positionnement et de mobilité, et transmission (40) de ladite information de positionnement et de mobilité à un satellite source défilant participant à une communication par satellite courante avec ledit terminal utilisateur mobile ;
- par chaque satellite source défilant (34), à partir de la ou desdites information(s) de positionnement et de mobilité reçues du ou desdits terminaux utilisateurs mobiles dont ledit satellite source à la gestion de communication par satellite courante, détermination (42) et transmission (44) d'au moins un vecteur de transfert de communications par satellite, chaque vecteur de transfert de communications par satellite étant transmis à un satellite cible défilant, et configuré pour l'informer de l'ensemble des terminaux utilisateurs mobiles dont la continuité de communication par satellite, identifiée par un identifiant de session également indiqué au sein dudit vecteur, est à prendre en charge au prochain changement de secteur de couverture satellite, selon ledit défilement.

2. Procédé de transfert de communication par satellite selon la revendication 1, dans lequel ladite étape de détermination d'une information de positionnement et de mobilité comprend la détermination d'au moins trois éléments formant ladite information de positionnement et de mobilité correspondant à :

- la vitesse de déplacement dudit terminal utilisateur mobile ;
- la direction de déplacement dudit terminal utilisateur mobile ;
- la position courante dudit terminal utilisateur mobile.

3. Procédé de transfert de communication par satellite selon la revendication 1 ou 2, comprenant en outre ensuite une étape, mise en oeuvre par chaque satellite cible défilant, de réception dudit vecteur de transfert de communications par satellite et de génération (46) et transmission (48) d'un message d'accusé réception dudit vecteur de transfert de communications par satellite audit satellite source ayant émis ledit vecteur de transfert de communications par satellite.

4. Procédé de transfert de communication par satellite selon la revendication 3, comprenant en outre ensuite, les étapes suivantes, mises en oeuvre par chaque satellite source défilant :

- réception de chaque message d'accusé réception de vecteur de transfert émis par chaque satellite cible ;
- génération (50) d'un message de contrôle de ressources de communication satellite configuré pour informer chaque terminal utilisateur mobile, dont ledit satellite source a la gestion de communication par satellite courante, du satellite cible chargé de prendre en charge la communication par satellite courante au prochain changement de secteur de couverture satellite, selon ledit défilement, et transmission (52) dudit message à chaque terminal utilisateur mobile, dont ledit satellite source à la gestion de communication par satellite courante.

5. Procédé de transfert de communication par satellite selon la revendication 4, comprenant en outre ensuite les étapes suivantes, mises en oeuvre par chaque terminal utilisateur mobile de ladite pluralité :

- réception dudit message de contrôle de ressources de communication satellite ;
- estimation (54) du temps restant jusqu'audit transfert de prise en charge de la communication par satellite courante par ledit satellite cible indiqué au sein dudit message de contrôle de ressources de communication satellite ;
- génération (56), et transmission (58) audit satellite source ayant en charge la communication par satellite courante, d'un message d'accusé réception dudit message de contrôle de ressources de communication satellite comprenant ledit temps restant avant transfert estimé lors de ladite estimation ;
- préparation (60) de la position de son système antennaire pour pointer ledit satellite cible au bout dudit temps restant estimé.

6. Procédé de transfert de communication par satellite selon la revendication 5, dans lequel ladite estimation utilise le référentiel de l'éphéméride du défilement dudit satellite cible.

7. Procédé (10) de transfert de communication par satellite selon la revendication 5 ou 6, comprenant en outre ensuite les étapes suivantes, mises en oeuvre par chaque satellite source défilant :

- réception de chaque message d'accusé réception comprenant ledit temps restant avant transfert estimé émis par chaque terminal utilisateur mobile, dont ledit satellite source à la gestion de communication par satellite courante,
- mise à jour (62) de chaque vecteur de transfert de communications par satellite avec une indication d'instants de transfert obtenue à partir d'un temps de transmission de message et desdits temps restants avant transfert estimés et associés à chaque terminal utilisateur mobile dudit ensemble de terminaux utilisateurs mobile indiqué au sein de chaque vecteur de transfert, et transmission (64) de chaque vecteur de transfert de communications par satellite mis à jour au satellite cible défilant correspondant.

8. Procédé (10) de transfert de communication par satellite selon la revendication 7, comprenant en outre ensuite une étape (66), mise en oeuvre par chaque terminal utilisateur mobile, après expiration dudit temps restant avant transfert, de génération et de transmission, audit satellite cible, d'un message de confirmation dudit transfert de communications par satellite.

9. Programme d'ordinateur comportant des instructions logicielles qui, lorsqu'elles sont exécutées par un ordinateur, mettent en oeuvre un procédé transfert de communications par satellite selon l'une quelconque des revendications précédentes.

10. Système (10) de communication par satellite comprenant au moins une pluralité (22) de terminaux utilisateurs mobiles au sol et les ressources de communication satellite d'une constellation de satellites défilants ($12_1$, $12_2$, $12_3$) selon un défilement prédéterminé avec une vitesse de déplacement D constante, ledit système de communication (10) par satellite étant configuré pour mettre en oeuvre le procédé de transfert de communication par satellite selon l'une quelconque des revendications précédentes 1 à 8.

FIG.1

EP 4 580 085 A1

FIG.2

EP 4 580 085 A1

Europäisches
Patentamt

European
Patent Office

Office européen
des brevets

## RAPPORT DE RECHERCHE EUROPEENNE

**Numéro de la demande**

EP 24 22 3262

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2022/231214 A1 (KT CORP [KR]) 3 novembre 2022 (2022-11-03) * alinéas [0108] - [0122] * * alinéas [0159] - [0194]; figure 1 * ----- | 1-10 | INV. H04B7/185 |
| A | US 2021/083760 A1 (SCHMIDT ANDREAS [DE] ET AL) 18 mars 2021 (2021-03-18) * alinéas [0107] - [0145]; figures 1,2 * ----- | 1-10 | |
| A | CN 115 462 007 A (PANASONIC IP CORP AMERICA) 9 décembre 2022 (2022-12-09) * pages 13,16-25; figure 10 * ----- | 1-10 | |

**DOMAINES TECHNIQUES RECHERCHES (IPC)**

H04B

Le présent rapport a été établi pour toutes les revendications

| Lieu de la recherche | Date d'achèvement de la recherche | Examinateur |
|---|---|---|
| La Haye | 15 avril 2025 | Esbri, Oriol |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

                                                    
& : membre de la même famille, document correspondant

EPO FORM 1503 03.82 (P04C02)

**EP 4 580 085 A1**

## ANNEXE AU RAPPORT DE RECHERCHE EUROPEENNE
## RELATIF A LA DEMANDE DE BREVET EUROPEEN NO.

EP 24 22 3262

15-04-2025

| Document brevet cité au rapport de recherche | Date de publication | Membre(s) de la famille de brevet(s) | Date de publication |
|---|---|---|---|
| WO 2022231214 A1 | 03-11-2022 | EP 4333503 A1 | 06-03-2024 |
| | | US 2024205783 A1 | 20-06-2024 |
| | | WO 2022231214 A1 | 03-11-2022 |
| US 2021083760 A1 | 18-03-2021 | BR 112020016607 A2 | 15-12-2020 |
| | | CN 111819803 A | 23-10-2020 |
| | | CN 114867074 A | 05-08-2022 |
| | | EP 3763056 A1 | 13-01-2021 |
| | | EP 4503739 A2 | 05-02-2025 |
| | | JP 7055886 B2 | 18-04-2022 |
| | | JP 7286835 B2 | 05-06-2023 |
| | | JP 7513348 B2 | 09-07-2024 |
| | | JP 2021516486 A | 01-07-2021 |
| | | JP 2022105002 A | 12-07-2022 |
| | | JP 2023109929 A | 08-08-2023 |
| | | KR 20200130255 A | 18-11-2020 |
| | | KR 20220115811 A | 18-08-2022 |
| | | KR 20230098352 A | 03-07-2023 |
| | | RU 2769222 C1 | 29-03-2022 |
| | | RU 2022107239 A | 04-04-2022 |
| | | US 2021083760 A1 | 18-03-2021 |
| | | US 2023155668 A1 | 18-05-2023 |
| | | WO 2019170866 A1 | 12-09-2019 |
| CN 115462007 A | 09-12-2022 | CN 115462007 A | 09-12-2022 |
| | | CN 117879694 A | 12-04-2024 |
| | | EP 3905546 A1 | 03-11-2021 |
| | | EP 4143991 A1 | 08-03-2023 |
| | | JP 2023524461 A | 12-06-2023 |
| | | US 2023179294 A1 | 08-06-2023 |
| | | WO 2021219283 A1 | 04-11-2021 |

EPO FORM P0460